Europäisches Patentamt

European Patent Office

Office européen des brevets

(19)

(11) EP 0 648 197 B1

(12) FASCICULE DE BREVET EUROPEEN

(45) Date de publication et mention
de la délivrance du brevet:
**16.10.1996 Bulletin 1996/42**

(21) Numéro de dépôt: **93914808.6**

(22) Date de dépôt: **02.07.1993**

(51) Int Cl.⁶: **C04B 41/45**

(86) Numéro de dépôt international:
**PCT/FR93/00684**

(87) Numéro de publication internationale:
**WO 94/01380 (20.01.1994 Gazette 1994/03)**

(54) **PROCEDE ET DISPOSITIF D'INTRODUCTION DE MATIERE DANS LA MASSE D'UN MATERIAU A POROSITE OUVERTE, ET MATERIAU OBTENU AVEC UN TEL PROCEDE**

VERFAHREN UND VORRICHTUNG ZUR EINARBEITUNG VON STOFFEN IN DIE MASSE EINES OFFENPORIGEN MATERIALS, SOWIE MITTELS DIESES VERFAHRENS HERGESTELLTES MATERIAL

METHOD AND DEVICE FOR DELIVERING A SUBSTANCE INTO THE BULK OF AN OPEN-PORE MATERIAL, AND RESULTING MATERIAL

(84) Etats contractants désignés:
**AT BE CH DE DK ES FR GB GR IE IT LI LU MC NL PT SE**

(30) Priorité: **03.07.1992 FR 9208269**

(43) Date de publication de la demande:
**19.04.1995 Bulletin 1995/16**

(73) Titulaires:
• **ELECTRICITE DE FRANCE**
**F-75008 Paris (FR)**
• **TEXINFINE**
**F-69466 Lyon (FR)**

(72) Inventeurs:
• **DAMIEN, Alain**
**F-95150 Taverny (FR)**
• **DELETIE, Pierre**
**F-78260 Achères (FR)**
• **GUTIERREZ, Gilles**
**F-69006 Lyon (FR)**

(74) Mandataire: **Desaix, Anne et al**
**Ernest Gutmann - Yves Plasseraud S.A.**
**3, rue Chauveau-Lagarde**
**75008 Paris (FR)**

(56) Documents cités:
**EP-A- 0 182 344        WO-A-91/09153**
**US-A- 3 523 884**

## Description

La présente invention concerne un procédé et un dispositif d'introduction de matière dans la masse d'un matériau à porosité ouverte, et un matériau consolidé ou étanche obtenu par la mise en oeuvre d'un tel procédé.

Le matériau à porosité ouverte peut être, par exemple, du bois, du béton, de l'argile, de la pierre, à base de granite, de gypse, de grès ou de tout autre type de matériau. Il peut être naturel ou artificiel. Il peut également être composite comme par exemple du béton renforcé par des armatures métalliques.

La porosité est définie comme étant le rapport entre le volume des vides contenus dans le matériau et le volume total du matériau, le vide se présentant sous forme de canaux ou de cavités dans le matériau.

Par matériau à porosité ouverte, il convient d'entendre un matériau dont une partie au moins des cavités et canaux qu'il comporte communiquent les uns avec les autres pour former des espaces vides continus d'un coté à l'autre du matériau.

L'invention est applicable à la consolidation de terrains ou de fondations, par exemple pour des barrages, des ponts, etc.

Une autre application de l'invention consiste à rendre étanche un matériau à l'eau et/ou isolant à l'électricité.

L'invention trouve par ailleurs une application particulièrement importante bien que non exclusive, dans le domaine de la consolidation de pierres, par exemple de pierres appartenant à un ouvrage d'art ou à un monument historique qui est dégradé ou risque d'être dégradé par la pollution ou des phénomènes de lixiviation naturelle et/ou artificielle.

Elle permet également de réparer et consolider des objets d'art anciens en mauvais état.

On connaît déjà des procédés de consolidation de matériaux.

Par exemple dans le cas des pierres, il existe des procédés consistant à faire migrer des éléments de protection dans la zone superficielle des pierres, voire dans certaines de leurs parties internes via des fissures ou des lézardes.

On sait ainsi faire pénétrer du silicate d'éthyle jusqu'à 5cm de profondeur dans certains matériaux.

Mais de tels procédés présentent différents inconvénients :

- ils ne permettent pas une consolidation en profondeur et sensiblement homogène du matériau dans la masse ;
- ils nécessitent en général la mise en pression du produit consolidant ;
- ils ne réalisent qu'une protection superficielle.

Il existe également un procédé de consolidation de matériaux argileux par électro-osmose. Un tel procédé s'apparente plutôt à une diffusion sous champ électrique en milieu humide, le long d'une paroi présentant un potentiel zéta notablement différent de zéro. Il présente donc de ce fait des inconvénients notamment de mise en oeuvre et reste limité au cas de consolidation des argiles.

La présente invention vise à fournir un procédé, un dispositif et des matériaux répondant mieux que ceux antérieurement connus aux exigences de la pratique, notamment en ce qu'ils autorisent une excellente consolidation dans la masse du matériau traité et/ou permettent de le rendre plus étanche à l'eau ou plus isolant à l'électricité, ou les deux, de façon satisfaisante.

Dans ce but, l'invention propose, notamment, un procédé d'introduction de matière dans la masse d'un matériau à porosité ouverte, caractérisé

- en ce que l'on réalise une migration électrophorétique dans la masse de ce matériau d'une dispersion d'espèces ioniques au sein d'une solution, sous l'effet d'un champ électrique appliqué entre une première zone et une seconde zone distincte de ce matériau,
- en ce que ladite dispersion contient deux espèces ioniques réactives de signes opposés, ces espèces ioniques étant normalement susceptibles d'interagir entre elles pour produire un élément dur ou imperméable, ou les deux à la fois, le cas échéant sous réserve d'un ajustement préalable de leurs proportions relatives au sein de la dispersion afin d'orienter ladite interaction vers la production de cet élément dur et/ou imperméable,
- en ce que celle des deux espèces ioniques réactives dont la charge est de signe opposé au potentiel zéta du matériau (pour autant que celui-ci présente un potentiel zéta différent de zéro) est associée à un vecteur ayant un potentiel zéta de même signe que celui du matériau, formant une barrière électriquement isolante entre ladite espèce de signe opposé et à la fois le matériau et l'autre espèce ionique réactive, et dont la stabilité peut être préservée pendant un temps suffisant pour assurer une répartition approximativement uniforme entre la première et la seconde zone dans une partie au moins de la masse du matériau, sous l'effet du champ électrique.

Dans le cas où le potentiel zéta du matériau serait égal à zéro, notons qu'on peut alors choisir indifféremment d'associer le vecteur à l'une ou l'autre des espèces ioniques réactives.

Rappelons que le potentiel zéta d'un élément placé dans un liquide en déplacement relatif par rapport à l'élément, est le potentiel électrocinétique qui existe entre la surface séparant la zone de liquide fixe qui se trouve immédiatement en contact avec l'élément et la zone de liquide adjacente qui est en déplacement relatif par rapport à l'élément.

Il est défini par la formule suivante:

$$pZ = \frac{4\Pi.\eta.\mu}{D}$$

avec:

$\eta$ : viscosité de la phase dispersante (eau) ($10^{-1}$ P1)

$\mu$ : mobilité de la particule (en $cm^2.V^{-1}.s^{-1}$). et

D : constante diélectrique de la phase dispersante (eau).

A cet égard, on peut faire également référence à la définition donnée dans des ouvrages tels que "ZETA POTENTIAL in colloïd science - Principles and applications" de Robert J. HUNTER - Academic Press 1981 ou "Control of colloïd stability through zeta Potential" de Thomas M. RIDDICK - Creative Press NYC ; publié par la société Zeta meter Inc.

Dans un mode de réalisation avantageux, la matière dont est constituée le vecteur est telle qu'une interruption de l'application du champ électrique entraîne, à terme ou sensiblement immédiatement, une disparition de la barrière.

Avantageusement la matière du vecteur est telle qu'une augmentation sensible du champ électrique au-delà d'un seuil approximativement prédéterminé entraîne une disparition de la barrière.

Dans un autre mode de réalisation, un apport de chaleur externe au matériau au-delà d'un certain seuil de température entraîne une disparition de la barrière.

L'invention propose également un procédé d'introduction et de formation in situ de matière, dans la masse d'un matériau à porosité ouverte, caractérisé

- en ce que l'on réalise une migration électrophorétique dans la masse de ce matériau d'une dispersion d'espèces ioniques au sein d'une solution, sous l'effet d'un champ électrique appliqué entre une première zone et une seconde zone distincte de ce matériau,

- en ce que ladite dispersion contient deux espèces ioniques réactives de signes opposés, ces espèces ioniques étant normalement susceptibles d'interagir entre elles pour produire un élément dur ou imperméable, ou les deux à la fois, le cas échéant sous réserve d'un ajustement préalable de leurs proportions relatives au sein de la dispersion afin d'orienter ladite interaction vers la production de cet élément dur et/ou imperméable,

- en ce que l'on masque l'activité électrique de celle des deux espèces ioniques réactives dont la charge est de signe opposé au potentiel zéta du matériau en l'associant à un vecteur ayant un potentiel zéta de même signe que celui du matériau, formant une barrière électrique sensiblement étanche entre espèces réactives et matériau, de signes opposés, tant que sont maintenues les conditions opératoires de la diffusion électrophorétique, mais instable lorsqu'on applique au matériau d'autres conditions opératoires déterminées,

- et en ce que l'on applique lesdites autres conditions opératoires déterminées lorsque les espèces sont réparties de façon approximativement uniforme entre la première et la seconde zone dans une partie au moins de la masse du matériau.

Avantageusement les autres conditions opératoires déterminées comprennent l'interruption de l'application du champ électrique.

Dans autre un mode de réalisation avantageux, les autres conditions opératoires déterminées comprennent l'augmentation sensible de l'intensité du champ électrique au-delà d'un seuil compatible avec la stabilité de la barrière sensiblement étanche.

Avantageusement également les autres conditions opératoires déterminées comprennent un apport de chaleur au matériau au-delà d'un seuil compatible avec la stabilité de la barrière sensiblement étanche.

Le matériau peut par exemple et notamment être chauffé par apport externe de chaleur ou être directement chauffé dans la masse, par micro-onde ou par effet Joule par exemple.

Dans des modes de réalisation avantageux du procédé selon l'invention, on a de plus recours à l'une et/ou l'autre des dispositions suivantes :

- Le procédé est appliqué à la consolidation du matériau.

- Le vecteur est formé de vésicules lipidiques à base de molécules amphiphiles, propres à encapsuler l'espèce ionique dont le signe est opposé à celui du potentiel zéta du matériau.

- Les molécules amphiphiles du vecteur d'encapsulage sont choisies parmi les agents tensio-actifs ou les phospholipides.

On emploiera par exemple des agents tensio-actifs dispersants, anioniques pour une charge négative, dont notamment les polyphosphates ou les polyacrylates, cationiques pour une charge positive, dont notamment les alkylammonium.

- Le procédé est caractérisé

  - en ce qu'il est appliqué à la consolidation d'un matériau lithique tel que de la pierre ou du béton poreux,
  - en ce que les espèces ioniques de signes opposés comportent des ions $Ca^{++}$ et des ions $PO_4^{3-}$,
  - en ce que ce sont les ions $Ca^{++}$ qui sont encapsulés dans le vecteur ,
  - et en ce que les proportions relatives de ces espèces ioniques sont ajustées au préalable, compte tenu le cas échéant des éléments constitutifs du matériau lithique, de façon à entraîner une formation de phosphate calcique au sein même de la masse traitée du matériau, éventuellement après application des autres conditions aléatoires déterminées.

- Les phosphates calciques formés comprennent essentiellement de l'apatite.
- L'apatite est de l'hydroxyapatite.
- La formule générale du phosphate calcique recherché étant donnée par l'équation suivante :

$$Ca_{10-x}(PO4)_{6-x-y}(HPO4)_y(OH)_{2-z}$$

x, y et z étant liés par la relation d'équilibre des charges suivante:

$$2(10-x) = 3(6-x-y) + 2y + 2 - z$$

avec $x + y + z = 0$ pour $0<x<1$,
on substitue un ou plusieurs composants de cette formule en remplaçant un ou plusieurs ions $Ca^{2+}$ par un ou plusieurs éléments choisis parmi $Sr^{2+}$, $Ba^{2+}$, $Pb^{2+}$, $Ln^{3+}$, $Na^+$, $Mg^{2+}$, et/ou un ou plusieurs ions $Po4^{3-}$ par un ou plusieurs éléments choisis parmi $VO_4^{3-}$, $AsO_4^{3-}$, $SiO_4^{4-}$, $Co_3^{2-}$, $HPO_4^{2-}$, $SO_4^{2-}B$ et/ou un ou plusieurs ions $OH^-$ par un ou plusieurs éléments choisis parmi $F^-$, $Cl^-$, $CO_3^{2-}$, $S^{2-}$.
- Les vésicules sont "molles" ou "souples", de taille compatible avec le diamètre moyen des cavités ou pores du matériau ; de façon surprenante, elles peuvent notamment être de diamètre moyen supérieur au diamètre moyen des cavités vides du matériau. Par vésicules souples il convient d'entendre des vésicules qui présentent une température de transition de phase inférieure à 50°C.
- Le diamètre moyen des vésicules est inférieur à de l'ordre de 500 nm, voire à de l'ordre de 300 nm, et avantageusement à de l'ordre de 250 nm, par exemple de l'ordre de 100 nm (notamment dans le cas de certains grès).
- Le procédé est appliqué à rendre étanche le matériau.
  Il peut s'agir d'une étanchéité à l'eau, et/ou à l'air, et/ou une isolation à l'électricité.
- Le vecteur est formé de structures matricielles à base de molécules hydrophiles insolubles (ou très peu solubles), propres à capter l'espèce ionique dont le signe est opposé à celui du potentiel zéta du matériau.
  Par insoluble, il faut notamment entendre une solubilité de la structure inférieure à $1mg/l$, voire $10^{-3}mg/l$.
- L'espèce ionique captée par la structure matricielle est choisie parmi les molécules non hydrosolubles telles que les polymères biologiques naturels (cellulose par exemple) et les polymères de synthèse (les carbomères par exemple).
- Le potentiel zéta du vecteur et/ou des espèces ioniques est supérieur à 20 mVolts en valeur absolue, et avantageusement compris entre de l'ordre de 20 mVolts et de l'ordre de 60 mVolts.

L'invention propose également un matériau tel qu'obtenu par le procédé de consolidation qui est décrit précédemment.
Le matériau de l'invention peut également être défini de la façon suivante :

- Il s'agit d'un matériau lithique consolidé caractérisé par des pores chargés en apatite répartie sur une portion au moins de l'épaisseur dudit matériau lithique.
- Il s'agit d'un matériau lithique consolidé caractérisé par des pores chargés en apatite sensiblement répartie sur la totalité de l'épaisseur dudit matériau.
- Le matériau lithique consolidé est caractérisé par des pores chargés en hydroxyapatite.
- Il s'agit d'un matériau étanche caractérisé par des pores chargés en matière hydrophobe choisie parmi les polymères biologiques naturels et les polymères de synthèse, ladite matière étant sensiblement répartie sur une portion au moins de l'épaisseur dudit matériau.

- Le matériau étanche est caractérisé par des pores chargés en matière hydrophobe choisie parmi les polymères biologiques naturels et les polymères de synthèse, ladite matière étant sensiblement répartie sur la totalité de l'épaisseur dudit matériau.
- Le matériau lithique étanche est de la pierre, du béton ou du béton renforcé par des armatures.

L'invention concerne également un dispositif d'introduction de matière dans la masse d'un matériau à porosité ouverte présentant au moins deux faces externes distinctes, en vis à vis, de chaque coté dudit matériau, à savoir une première face et une seconde face, caractérisé en ce qu'il comporte :

- une première enceinte de rétention d'une première solution, comprenant une paroi ouverte et des moyens d'application de ladite paroi ouverte de façon sensiblement étanche sur ladite première face,
- une seconde enceinte de rétention d'une seconde solution, comprenant une paroi ouverte et des moyens d'application de ladite paroi ouverte de ladite seconde enceinte de façon sensiblement étanche sur la dite seconde face,
- des moyens générateurs d'un champ électrique entre la première face et la seconde face, agencés pour permettre la migration électrophorétique d'espèces ioniques dispersées dans la première solution au travers du matériau vers la seconde solution, et
- des moyens d'alimentation en continu de la première solution avec au moins une desdites espèces ioniques.

Une face peut notamment et par exemple être une portion de surface continue.

Avantageusement le champ électrique est compris entre de l'ordre de 0,1 V/cm et de l'ordre de 20 V/cm, et plus particulièrement inférieur à de l'ordre de 10 V/cm.

Dans des modes de réalisation avantageux, on a de plus recours à l'une et/ou l'autre des dispositions suivantes :

- Le dispositif comporte de plus des moyens de prélèvement et d'analyse du contenu de la seconde solution en espèces ioniques correspondant aux espèces introduites dans la première solution.
- Le dispositif comporte des moyens permettant d'augmenter sensiblement l'intensité du champ électrique au-delà d'un seuil déterminé.
- Le dispositif comporte des moyens de chauffage externe du matériau au-delà d'un seuil déterminé.
- Le dispositif comporte des moyens de chauffage interne du matériau au-delà d'un seuil déterminé, par exemple par micro-onde.

L'invention sera mieux comprise à la lecture de la description qui suit de modes particuliers de réalisation.

La description se réfère aux dessins qui l'accompagnent, dans lesquels :

- la figure 1 est un schéma montrant le principe mis en oeuvre dans l'invention, avec encapsulage d'une espèce cationique dans un vecteur se présentant sous forme de vésicules ;
- la figure 2 est un schéma de principe d'un dispositif selon un premier mode de réalisation de l'invention appliqué à la consolidation d'une pièce de forme quelconque ;
- la figure 3 est un schéma de principe d'un dispositif selon un second mode de réalisation de l'invention appliqué à la consolidation d'un terrain ;
- la figure 4 montre schématiquement les différentes voies d'obtention de l'hydroxyapatite dans le cas d'une consolidation de matériau lithique selon un mode de réalisation de l'invention;
- la figure 5 donne le diagramme de phases du système $CaO-P_2O_5$ (phosphate calcique), à température ambiante ;
- la figure 6 est un diagramme donné à titre d'exemple, montrant l'augmentation et la brusque chute de conductivité électrique d'un matériau avant, pendant et après consolidation d'une carotte de grès selon le mode de réalisation de l'invention plus particulièrement décrit ici.

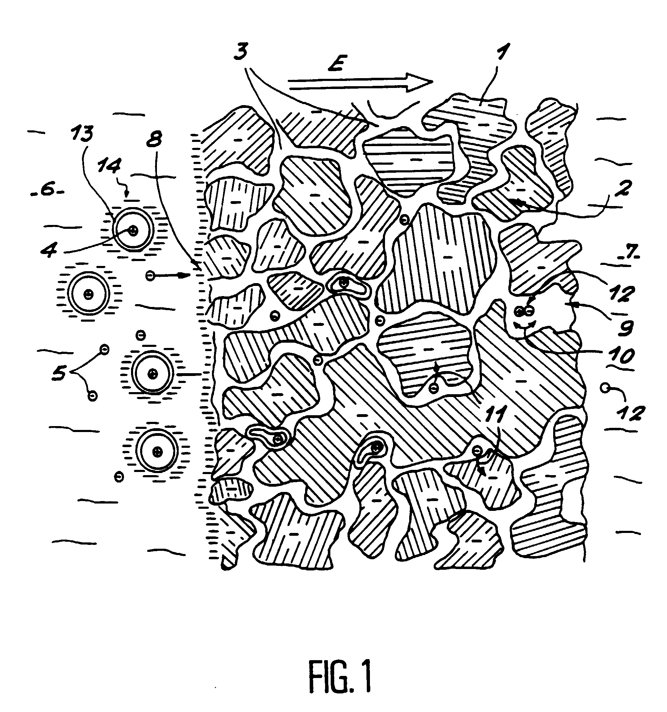

La figure 1 est un schéma du principe mis en oeuvre dans l'invention.

Ce principe repose sur l'introduction au sein d'un matériau 1 de potentiel zéta 2 déterminé, (par exemple de signe négatif et égal à de l'ordre de - 40mV), présentant une porosité ouverte (3), de deux espèces ioniques de signes opposés, à savoir une espèce cationique 4 et une espèce anionique 5.

Le matériau a été au préalable humidifié, et se trouve placé entre deux solutions 6 et 7, respectivement en contact avec les faces 8 et 9 opposées et délimitant la partie du matériau à traiter.

L'espèce ionique de signe opposé à celui du potentiel zéta du matériau (ici les cations 4), est susceptible d'interagir (flèche 10) avec l'espèce ionique de même signe que le matériau (ici les anions 5), ainsi qu'avec certain composant du matériau 1 (flèche 11), pour produire un élément 12 dur ou hydrophobe, ou les deux à la fois.

Le procédé permet à cet élément de se former un peu partout dans la masse de la partie de matériau 1 que l'on veut traiter, ce qui permet de le durcir et/ou de l'étancher de façon sensiblement homogène et en profondeur.

Afin d'éviter aux cations d'interagir prématurément, on masque l'activité électrique de l'espèce cationique en l'associant à un vecteur 13, de potentiel zéta 14 de même signe que celui du matériau, qui forme une barrière électriquement isolante entre espèces et matériau de signes opposés.

Cette protection est maintenue pendant un temps suffisant pour permettre le déplacement et la pénétration des espèces dans la masse sur l'épaisseur sensiblement souhaitée de matériau à consolider ou à étancher.

Lorsque la protection disparaît, il y a alors interaction, l'élément 12, dur ou hydrophobe, se formant ensuite in situ, plus ou moins rapidement.

Afin d'assurer le déplacement des ions, un champ électrique E, par exemple de quelques volts par centimètre, est appliqué au matériau dans la direction de la migration souhaitée, qui s'effectue donc par électrophorèse.

Lorsque les espèces ioniques 4 et 5 se retrouvent dans la solution 7, puis forment des éléments durs 12, qui cristallisent, on est assuré que tout le matériau situé entre les faces 8 et 9, a bien été consolidé.

Sur la figure 1, le vecteur 13 est symbolisé sous forme d'une capsule.

Mais d'autres vecteurs, comme une structure matricielle ou spongieuse par exemple, peuvent être utilisés dans l'invention, comme on l'a vu, en fonction notamment des applications et du but recherchés.

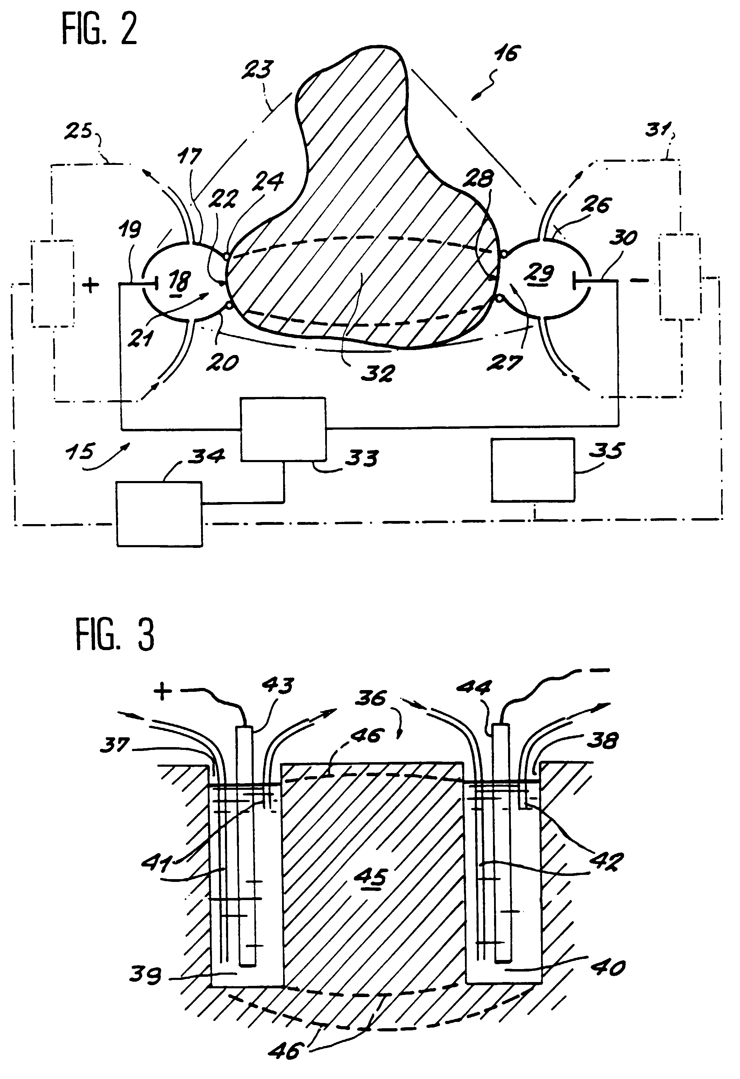

La figure 2 montre de façon schématique un mode de réalisation d'un dispositif 15 selon l'invention, appliqué à la consolidation d'une pièce 16 de forme quelconque.

Le dispositif comporte une première enceinte 17 de rétention d'une première solution 18 (anolyte) renfermant une anode 19.

L'enceinte 17 comporte une paroi 20 munie d'une ouverture 21 applicable de façon étanche sur une première face 22 de la pièce 16.

Des moyens d'application 23 schématisés en traits mixtes, comprenant par exemple des sangles ou des tirants de fixation sur le coprs du matériau, sont prévus.

L'enceinte 17 est agencée pour faire "ventouse" sur la face 22, un joint 24 assurant par ailleurs l'étanchéité.

Un dispositif 25 de circulation de l'anolyte, permettant d'amener en continu, la dispersion d'espèces ioniques contenant les espèces ioniques réactives par exemple des ions calcium encapsulés dans des vésicules lipidiques de dimension nanométrique, dans une solution d'ions phosphate, est également prévu.

Le dispositif 15 comporte également au moins une seconde enceinte 26 comportant une paroi ouverte 27 applicable de façon étanche sur la face 28 de la pièce 16, située de l'autre côté de ladite pièce par rapport à la face 22.

L'enceinte 26 contient la solution 29 (catholyte) et est munie d'une cathode 30.

Elle est fixée sur la pièce de façon similaire à l'enceinte 17.

Un dispositif 31, de circulation du catholyte est prévu. Il permet par exemple, et s'il y a lieu, d'ajuster le pH de l'anolyte avec lequel il peut être mis en communication à cet effet (de façon non représentée), et de faire des prélèvements pour mesure.

Des moyens de vidange (non représentés) des enceintes sont également prévus.

Sur la figure 2, on a délimité en traits interrompus la zone 32 consolidée de la pièce 16.

Le dispositif 15 comporte également des moyens 33 d'application d'une tension déterminée entre l'anode 19 et la cathode 30 au travers des solutions anolyte et catholyte et de la pièce 16 dont la zone 32 a été préalablement humidifiée.

Les moyens 33 comprennent par exemple un générateur de courant de 200 Volts sous 5 ampères. Ces moyens 33 sont commandés par un appareil 34 de commande et de mesure, par exemple couplé de façon connue en elle-même à un micro-ordinateur (non représenté) de calcul et d'exploitation des résultats obtenus lors du fonctionnement du procédé.

Le dispositif comprend également avantageusement des moyens 35 d'application d'autres conditions opératoires, par exemple des moyens de chauffage externe ou interne de la pièce.

Les moyens 35, ainsi que les dispositifs 25 et 31, sont par exemple connectés à l'appareil de contrôle et de mesure 34 (traits mixtes), pour permettre un fonctionnement optimisé de l'ensemble du dispositif, de façon connue en elle-même.

On va maintenant décrire plus précisément la mise en oeuvre et le fonctionnement du dispositif 15 de la figure 2.

On met en place les enceintes 17 et 26 du dispositif 15 sur la pièce qui a été préalablement humidifiée, par exemple par imprégnation ou par projection, et on effectue les différentes connexions nécessaires avec les appareils et dispositifs décrits ci-dessus.

Puis on remplit les enceintes des solutions anolyte et catholyte.

La solution anolyte est préparée au fur et à mesure de façon connue en elle-même, pour éviter aux ions réactifs encapsulés d'être en présence trop longtemps avec les ions réactifs non encapsulés.

En effet, en fonction par exemple de la constitution des parois des vésicules, il peut y avoir des risques de disparition prématurée de la barrière, cette disposition pouvant s'effectuer progressivement (cinétique lente) même en l'absence d'application de secondes conditions opératoires.

On applique ensuite le champ électrique (par exemple 15 Volts) pendant un temps déterminé, les vésicules et les ions migrant au travers de la pièce.

Plusieurs manières de procéder sont alors possibles, et sont adaptées en fonction des résultats recherchés et/ou des données expérimentales préalablement obtenues, s'il y a lieu, à partir de tests avec traceurs (voir ci-après) :

1 - La destruction des barrières se fait naturellement au bout d'un certain laps de temps, avant traversée totale de la pièce par une première partie des ions réactifs.

Auquel cas, les réactions entre ions réactifs et le matériau vont se faire jusqu'à une profondeur déterminée, par exemple 60cm, en fonction du matériau lui-même, du vecteur utilisé, etc.

Il sera cependant en général difficile de savoir précisément jusqu'à quelle profondeur la consolidation ou l'étanchéité aura été réalisée, à moins d'avoir pu effectuer des tests avec traceurs au préalable.

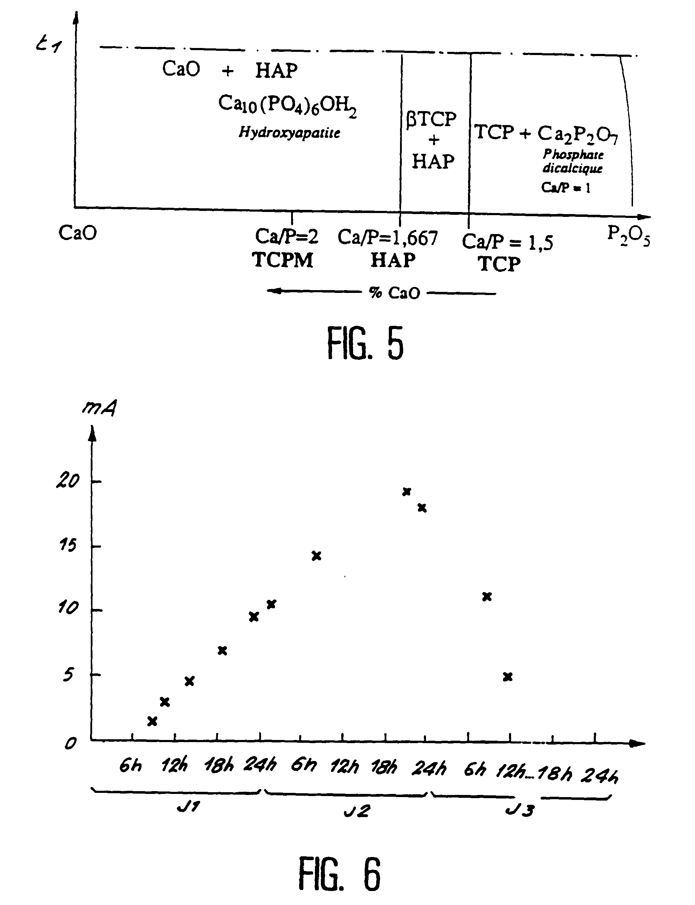

La prise dans la masse du matériau est alors par exemple surveillée par mesure électrique de l'intensité du courant passant au travers de la pièce, intensité mesurée de façon connue en elle-même, et dont un exemple de résultats est donné en référence à la figure 6.

On arrête d'appliquer la tension, lorsque l'intensité descend en-dessous d'un certain seuil. 2 - La destruction des barrières se fait naturellement au bout d'un certain laps de temps, supérieur au temps mis par les espèces réactives pour traverser totalement la pièce, ou se fait par application d'autres conditions opératoires.

Auquel cas, on a le choix entre arrêter le champ électrique et laisser les réactions se faire dans le temps, ou bien appliquer les secondes conditions opératoires pour détruire ou accélérer la destruction des barrières.

Pour savoir si les ions ont effectivement commencé à traverser la totalité de la pièce, il suffit par exemple de faire des prélèvements réguliers dans la solution catholyte et de les analyser.

La figure 3 montre schématiquement l'application du procédé selon l'invention à la consolidation d'un terrain 36.

Deux forages ou deux tranchées 37 et 38 sont réalisés de part et d'autre du terrain 36 à consolider. Ces forages sont alors éventuellement consolidés.

L'anolyte 39 et la catholyte 40 sont introduits et évacués en continu par les circuits 41 et 42, de façon connue en elle-même et similaire à ce qui vient d'être décrit en référence à la figure 2.

Une anode 43 plongée dans l'anolyte sur toute la hauteur du terrain à consolider, et une cathode 44 plongée dans la catholyte en vis à vis, appliquent un champ au travers du terrain et consolide alors la partie 45 (entre les traits interrompus 46) par application du procédé selon l'invention. Une fois la consolidation réalisée, le dispositif est évacué et les forages sont rebouchés.

On va maintenant décrire plus précisément un mode de réalisation du procédé de l'invention appliqué à la consolidation d'une pierre par migration au travers de la pierre d'ions $Ca^{2+}$, encapsulés dans des vésicules lipidiques.

Dans le procédé plus particulièrement décrit ici, les ions calcium sont chélatés par un précurseur de l'hydroxyapatite (un phosphate soluble) en phase acide dans une vésicule de taille inférieure à de l'ordre de 300nm, exprimant un potentiel zéta négatif par exemple voisin de - 40mV.

La stabilité d'un tel vecteur en milieu phosphorique est acquise par la texture même de la paroi du transporteur qui est de nature phospholipidique.

Mais ces conditions peuvent être adaptées en fonction de la pierre (ou du matériau) traitée. A ce titre, et pour optimiser ces conditions, des tests de type connu, utilisant par exemple des traceurs comme des ions métaux ($Cu^{++}$ par exemple) ou des traceurs radioactifs sont alors mis en oeuvre sur des échantillons préalablement extraits. Ils permettent de doser et d'adapter la constitution du vecteur et la charge de son potentiel zéta pour une pénétration optimum des espèces ioniques réactives, dans la pierre ou le matériau considéré.

La fabrication des vésicules ou vecteurs, transporteurs de taille nanométrique est par exemple réalisée selon la technique décrite dans le document FR-A-2.649.335. L'intérêt de cette technique est de synthétiser des vésicules de taille très réduite et de distribution homogène, mais d'autres techniques peuvent bien entendu être utilisées.

Les vésicules peuvent être multilamellaires ou unilamellaire. Leur paroi comporte par exemple un composé amphiphile tel que :

-	les phospholipides, comme la lécithine, les phosphatidylcholines naturelles ou synthétiques, les sphingomyélines, les phosphatidylinositols, le sphosphatidylsérines, les lysophosphatidylcholines, les dicétylphosphates.
-	Les détergents de synthèse ou naturels.
	Un composé conférant une charge positive ou négative à la surface de la membrane des vésicules est ensuite ajouté. Il s'agit par exemple de :
-	dipalmitoyl phosphatidylglycérol, pour obtenir une charge négative ;
-	ou de la stéarylamine, pour obtenir une charge positive.

En l'espèce le potentiel zéta des vésicules recherché doit être négatif.

Par ailleurs, dans le procédé plus particulièrement décrit ici, on fait disparaître les vecteurs par l'extinction du champ électrophorétique corrélé à une diminution progressive de la solubilité des éléments vectorisés agencés pour qu'il y ait une saponification très rapide des acides gras constitutifs de la paroi et à la précipitation de l'excès des phosphates.

Dans un mode préféré de l'invention et en ajustant la proportion Ca/P, comme on va le voir, il y a alors transformation en hydroxyapatite qui constitue le composé le plus stable de la famille des phosphates calciques.

Le principe de base de la réaction de lithification utilisé repose sur la synthèse de l'hydroxyapatite (HAP). Les différentes possibilités de synthèse de l'HAP sont décrites ci-après, la formule de base étant la suivante :

$$Ca_5(PO_4)_3OH$$

Dans d'autres modes de réalisation, il est par ailleurs possible de substituer certaines fonctions (ou éléments) de cette formule en partant de l'équation suivante :

$$Ca_{10-x} (PO_4)_{6-x-y} (HPO_4)_y (OH)_{2-z}$$

x, y et z étant liés par la relation d'équilibre des charges suivante:

$$2(10-x) = 3(6-x-y) + 2y + 2 - z$$

avec $x + y + z = 0$ pour $0 < x < 1$.

Plus précisément les substitutions suivantes sont possibles :

- $Ca^{2+}$ peut être remplacé par $Sr^{2+}$, $Ba^{2+}$, $Pb^{2+}$, $Ln^{3+}$, $Na^+$, $Mg^{2+}$ ;
- $PO_4^{3-}$ peut être remplacé par $VO_4^{3-}$, $AsO_4^{3-}$, $SiO_4^{4-}$, $CO_3^{2-}$, $HPO_4^{2-}$, $SO_4^{2-}$ ; et
- $OH^-$ peut être remplacé par $F^-$, $Cl^-$, $CO_3^{2-}$, $S^{2-}$.

Les principales voies de synthèse de la matière lithique sont par ailleurs données par les équations suivantes :

$$Ca_4 (PO_4)_2O + CaHPO_4, 2\ H_2O \longrightarrow Ca_5 (PO_4)_3OH + 2\ H_2O$$

$$3\beta\ Ca_3(PO)_4 + CaCO_3 + H_2O \longrightarrow 2\ Ca_5(PO_4)_3OH + CO_2$$

$$CaHPO_4, 2\ H_2O +\ _2CaCO_3 \longrightarrow Ca_5(PO_4)_3OH + CO_2 + 7\ H_2O$$

$$CaHPO_4, 2\ H_2O + \beta Ca_3(PO_4)_2 + CaCO_3 \longrightarrow Ca_5(PO_4)_3OH + CO_2 + 2\ H_2O$$

Il faut également tenir compte des délais de prise qui varient considérablement selon le type de réaction. Par exemple, on constate qu'il y a prise quasi instantanée dans le cas de la formation de composé de phosphate β tricalcique et de phosphate monocalcique hydraté.

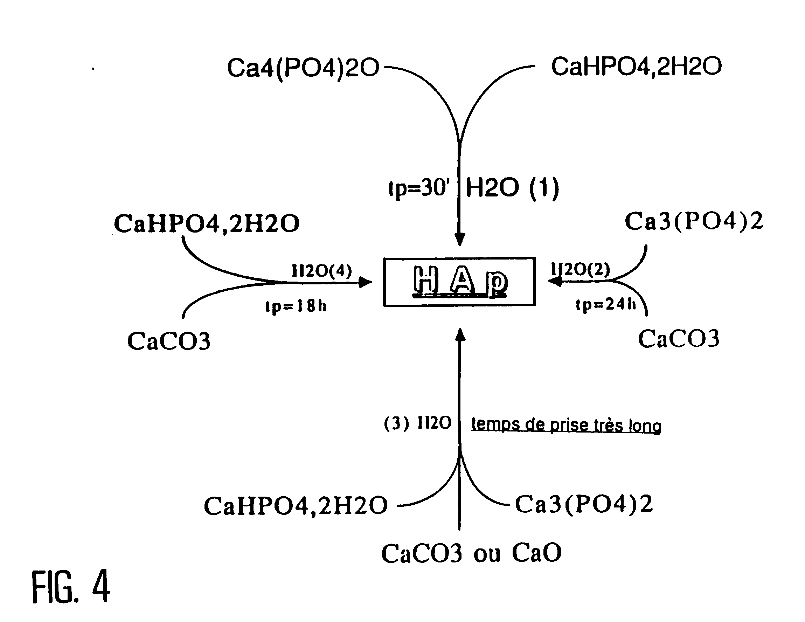

On a représenté sur la figure 4 un schéma montrant les différentes possibilités d'obtention d'hydroxyapatite (HPA) et sur la figure 5 le diagramme de phase du système CaO - $P_2O_5$.

La signification des abréviations de la figure est par ailleurs donnée dans le tableau ci-après.

A partir de ces éléments, l'homme du métier va pouvoir ajuster les proportions entre $Ca^{++}$ et $PO_4^{---}$, pour obtenir l'élément dur recherché.

Comme on peut le constater au vu de la figure 5 on obtient notamment une formation d'hydroxyapatite à température ambiante en recherchant un rapport : Ca/P = 2.

Dans la pratique, les Ca/P réels seront par exemple compris entre de l'ordre de 1,5 et 1,8, la maîtrise des concentrations relatives lors de la prise (fusion des vésicules également appelées liposomes) n'étant pas toujours parfaite.

Un ensemble de composés sera donc en général obtenu dans la masse du matériau à consolider selon le tableau suivant :

| Symbole | Formule | Nom | Ca/P |
|---|---|---|---|
| DCPD | $CaHPO_4, 2 H_2O$ | Phosphate dicalcique dihydrate | 1 |
| OCP | $Ca_8H_2(PO_4)_6, 5 H_2O$ | Phosphate otocalcique | 1,33 |
| TCP | $Ca_3 (PO_4)_2$ | Phosphate tricalcique | 1,5 |
| HAP | $Ca_{10} (PO_4)_6 OH_2$ | Hydroxylapatite | 1,67 |
| TCPM | $Ca_4 (PO_4)_2 O$ | Phosphate tétracalcique | 2 |

On va maintenant décrire la mise en oeuvre du procédé de l'invention plus particulièrement décrit ci-dessus, appliqué à un exemple spécifique, à savoir la consolidation d'une éprouvette de grés rose de 50 cm.

Il va de soi que l'homme du métier pourra adapter les enseignements de cet exemple, ainsi que de ce qui précède, à tous les cas spécifiques qu'il aurait à traiter en ajustant simplement les paramètres nécessaires grâce aux connaissances de base des domaines concernés par l'invention, à savoir la galénique, la chimie minérale et la diffusion d'espèce ionique dans un champ électrique.

Exemple :

Dans cet exemple, la solution située du coté de l'anode, ou anolyte, est une solution de phosphate acide, de pH se situant dans une plage de pH aux alentours de 6,5.

L'éprouvette constituée par une carotte cylindrique de 50cm de hauteur et de 25cm de diamètre, est mise en place dans un tube de vinyl dont le diamètre intérieur est légèrement inférieur au diamètre de l'éprouvette. Le montage se fait à chaud.

Un appareillage de structure est ensuite installé.

Il est constitué par deux T en PVC de 25cm de diamètre intérieur, et de tuyaux d'évacuation sous pression.

Les deux T sont situés de part et d'autre de l'éprouvette et servent d'enceintes de rétention des solutions référencées 7 et 8 dans la figure 1.

Les tuyaux sont munis à leur extrémité inférieure d'une ouverture permettant de vidanger complètement les volumes des enceintes pour procéder au nettoyage.

Dans l'enceinte qui recevra la cathode, est positionné un agitateur à barre de verre, qui assure une bonne isolation électrique.

Dans l'enceinte qui recevra l'anode, on introduit deux barres de graphite reliées au pôle positif d'un générateur de courant, par exemple un appareil générateur fabriqué par la société française SODILEC et susceptible de générer un courant continu de 150 Volts, avec une intensité pouvant atteindre 5 ampères. D'autre part, toujours dans l'enceinte de l'anode, se trouve un boudin de dialyse , de diamètre de 3cm et de 30cm de long. Ce boudin de dialyse est relié au compartiment cathodique par une pompe péristaltique qui assure la fermeture du circuit électrique dans ces conduits quand le circuit hydraulique secondaire (voir ci-après) fonctionne.

L'ensemble des deux enceintes, cathodique et anodique, ainsi que la carotte de pierre, sont suspendus à une potence en équilibre pour éviter toute mise sous traction des joints d'étanchéité entre la carotte et chacune des enceintes.

Afin de stabiliser le pH, et dans un mode de réalisation du montage avantageux applicable de façon générale au dispositif selon l'invention, un circuit secondaire est prévu pour neutraliser les enceintes anodique et cathodique, sans ajout ionique.

Une fois le dispositif d'essai mis en place, une différence de potentiel de 100 Volts est appliquée à la carotte entre l'anolyte et la catholyte, le champ électrique appliqué étant fonction de la conductibilité du milieu.

La catholyte est par ailleurs alimentée en continu avec une solution de vésicules diluée dans de l'eau déminéralisée, présentant une concentration de 10% d'une solution mère à 5% (Masse moléculaire vésiculaire/Masse totale) avec un débit compris par exemple entre 5 et 200 ml/mm.

Le courant passant au travers de la carotte entre anolyte et catholyte est mesuré, un exemple du profil des résultats obtenus étant fourni sur la figure 6.

On constate qu'à partir d'un temps déterminé (48 heures sur l'exemple de la figure 6), le courant passe par un pic puis se met à décroître rapidement, pour ne pratiquement plus passer après de l'ordre de 60 heures.

Les tests effectués sur la carotte montre alors un durcissement extrêmement important de celle ci, sur toute son épaisseur, l'analyse chimique faite sur des prélévements régulièrement répartis permettant de constater la formation d'hydroxyapatite dans la masse de la carotte.

Les mesures effectuées dans la catholyte montrent également de façon non destructive que puisque certaines espèces ioniques et vecteurs ont eu le temps de traverser la carotte, la consolidation est bien répartie sur l'épaisseur de celle-ci.

**Revendications**

1. Procédé d'introduction de matière dans la masse d'un matériau (1, 16, 36) à porosité ouverte, caractérisé

   - en ce que l'on réalise une migration électrophorétique dans la masse de ce matériau d'une dispersion d'espèces ioniques au sein d'une solution, sous l'effet d'un champ électrique appliqué (E) entre une première zone et une seconde zone distincte de ce matériau,
   - en ce que ladite dispersion contient deux espèces ioniques réactives (4, 5) de signes opposés, ces espèces ioniques étant normalement susceptibles d'interagir entre elles pour produire un élément dur ou hydrophobe (12), ou les deux à la fois, le cas échéant sous réserve d'un ajustement préalable de leurs proportions relatives au sein de la dispersion afin d'orienter ladite interaction vers la production de cet élément dur ou hydrophobe,
   - en ce que celle des deux espèces ioniques dont la charge est de signe opposé au potentiel zéta du matériau est associée à un vecteur (13) ayant un potentiel zéta (14) de même signe que celui du matériau, formant une barrière électriquement isolante entre ladite espèce de signe opposé et à la fois le matériau et l'autre espèce ionique réactive, et dont la stabilité peut être préservée pendant un temps suffisant pour assurer une répartition approximativement uniforme sous l'effet du champ électrique, entre la première et la seconde zone dans une partie au moins de la masse du matériau.

2. Procédé selon la revendication 1, caractérisé en ce que la matière dont est constituée le vecteur est telle qu'une interruption de l'application du champ électrique entraîne, à terme ou sensiblement immédiatement, une disparition de la barrière.

3. Procédé selon la revendication 1, caractérisé en ce que la matière du vecteur est telle qu'une augmentation sensible du champ électrique au-delà d'un seuil approximativement prédéterminé entraîne une disparition de la barrière.

4. Procédé selon la revendication 1, caractérisé en ce que la matière du vecteur est telle qu'un apport de chaleur externe au matériau au-delà d'un certain seuil de température entraîne une disparition de la barrière.

5. Procédé d'introduction de matière dans la masse d'un matériau (1, 16, 36) à porosité ouverte caractérisé

   - en ce que l'on réalise une diffusion électrophorétique dans la masse de ce matériau d'une dispersion de particules ionisées au sein d'une solution, sous l'effet d'un champ électrique appliqué entre une première zone et une seconde zone distincte de ce matériau,
   - en ce que ladite dispersion contient deux espèces ioniques réactives (4, 5) de signes opposés, ces espèces ioniques étant normalement susceptibles d'interagir entre elles pour produire un élément dur ou hydrophobe, ou les deux à la fois, le cas échéant sous réserve d'un ajustement préalable de leurs proportions relatives au sein de la dispersion afin d'orienter ladite interaction vers la production de cet élément dur ou hydrophobe,
   - en ce que l'on masque l'activité électrique de celle des deux espèces ioniques réactives (4) dont la charge est de signe opposé au potentiel zéta du matériau en l'associant à un vecteur (13) ayant un potentiel zéta (14) de même signe que celui du matériau, formant une barrière électrique sensiblement étanche entre espèces et matériau de signes opposés tant que sont maintenues les conditions opératoires de la diffusion électrophorétique, mais instable lorsqu'on applique au matériau d'autres conditions opératoires déterminées,
   - et en ce que l'on applique lesdites autres conditions opératoires déterminées lorsque les espèces sont réparties de façon approximativement uniforme entre la première et la seconde zone dans une partie au moins de la masse du matériau.

6. Procédé selon la revendication 5, caractérisé en ce que les autres conditions opératoires déterminées comprennent l'interruption de l'application du champ électrique .

7. Procédé selon la revendication 5, caractérisé en ce que les autres conditions opératoires déterminées comprennent l'augmentation sensible de l'intensité du champ électrique au-delà d'un seuil compatible avec la stabilité de la barrière sensiblement étanche.

**8.** Procédé selon l'une quelconque des revendications précédentes 5 à 7, caractérisé en ce que les autres conditions opératoires déterminées comprennent un apport de chaleur au matériau au-delà d'un seuil compatible avec la stabilité de la barrière sensiblement étanche.

**9.** Procédé selon l'une quelconque des revendications précédentes, caractérisé en ce que il est appliqué à la consolidation du matériau.

**10.** Procédé selon l'une quelconque des revendications précédentes, caractérisé en ce que le vecteur est formé de vésicules lipidiques à base de molécules amphiphiles, propres à encapsuler l'espèce ionique dont le potentiel zéta est de signe opposé à celui du matériau.

**11.** Procédé selon la revendication 10, caractérisé en ce que les molécules amphiphiles du vecteur d'emcapsulage sont choisies parmi les agents tensio-actifs ou les phospholipides.

**12.** Procédé selon l'une quelconque des revendications 9 à 11, caractérisé

- en ce qu'il est appliqué à la consolidation d'un matériau lithique tel que de la pierre ou du béton poreux,
- en ce que les espèces ioniques de signes opposés comportent des ions $Ca^{++}$ et des ions $PO_4^{3-}$,
- en ce que ce sont les ions $Ca^{++}$ qui sont encapsulés dans le vecteur ,
- et en ce que les proportions relatives de ces espèces ioniques sont ajustées au préalable, compte tenu le cas échéant des éléments constitutifs du matériau lithique, de façon à entraîner une formation de phosphates calciques au sein même de la masse traitée du matériau, éventuellement après application des autres conditions aléatoires déterminées.

**13.** Procédé selon la revendication 12, caractérisé en ce que les phosphates calciques formés comprennent essentiellement de l'apatite.

**14.** Procédé selon la revendication 13, caractérisé en ce que l'apatite est de l'hydroxyapatite.

**15.** Procédé selon la revendication 12, caractérisé en ce que la formule générale du phosphate calcique recherché étant donnée par l'équation suivante :

$$Ca_{10-x}(PO4)_{6-x-y}(HPO4)_y(OH)_{2-z}$$

$x$, $y$ et $z$ étant liés par la relation d'équilibre des charges suivante:

$$2(10-x) = 3(6-x-y) + 2y + 2 - z$$

avec $x + y + z = 0$ pour $0<x<1$,
on substitue un ou plusieurs composants de cette formule en remplaçant un ou plusieurs ions $Ca^{2+}$ par un ou plusieurs éléments choisis parmi $Sr^{2+}$, $Ba^{2+}$, $Pb^{2+}$, $Ln3^+$, $Na^+$, $Mg^{2+}$, et/ou un ou plusieurs ions $PO_4^{3-}$ par un ou plusieurs éléments choisis parmi $VO_4^{3-}$, $AsO_4^{3-}$, $SiO_4^{4-}$, $Co_3^{2-}$, $HPO_4^{2-}$, $SO_4^{2-}$, et/ou un ou plusieurs ions $OH^-$ par un ou plusieurs éléments choisis parmi $F^-$, $Cl^-$, $CO_3^{2-}$, $S^{2-}$.

**16.** Procédé selon l'une quelconque des revendications 10 à 15, caractérisé en ce que les vésicules sont souples et de taille supérieure à la porosité moyenne du matériau.

**17.** Procédé selon l'une quelconque des revendications 10 à 16, caractérisé en ce que le diamètre moyen des vésicules est inférieur à de l'ordre de 500 nm.

**18.** Procédé selon l'une quelconque des revendications 1 à 9, caractérisé en ce que il est appliqué à rendre étanche le matériau.

**19.** Procédé selon la revendication 18, caractérisé en ce que le vecteur est formé de structures matricielles à base de molécules hydrophiles et insolubles, propres à capter l'espèce ionique dont le potentiel zéta est de signe opposé à celui du matériau.

**20.** Procédé selon la revendication 19, caractérisé en ce que l'espèce ionique captée par la structure matricielle est choisie parmi les molécules non hydrosolubles telles que les polymères biologiques naturels ou les polymères de synthèse.

**21.** Procédé selon selon l'une quelconque des revendications précédentes caractérisé en ce que le potentiel zéta du vecteur est supérieure à de l'ordre de 20 mVolts en valeur absolue.

**22.** Matériau lithique consolidé caractérisé par des pores chargés en apatite répartie sur une portion au moins de l'épaisseur dudit matériau lithique.

**23.** Matériau lithique consolidé selon la revendication 22 caractérisé par des pores chargés en apatite sensiblement répartie sur la totalité de l'épaisseur dudit matériau.

**24.** Matériau lithique consolidé selon la revendication 22 ou 23, caractérisé par des pores chargés en hydroxyapatite.

**25.** Matériau étanche caractérisé par des pores chargés en matière hydrophobe prise parmi les polymères biologiques naturels ou les polymères de synthèse, ladite matière étant sensiblement répartie sur une portion au moins de l'épaisseur dudit matériau.

**26.** Matériau étanche caractérisé par des pores chargés en matière hydrophobe prise parmi les polymères biologiques naturels ou les polymères de synthèse, ladite matière étant sensiblement répartie sur la totalité de l'épaisseur dudit matériau.

**27.** Matériau lithique étanche selon la revendication 25 ou la revendication 26, tel que la pierre, le béton ou le béton armé .

**28.** Dispositif (15) d'introduction de matière dans la masse d'un matériau à porosité ouverte présentant au moins deux faces externes distinctes, en vis à vis, de chaque coté dudit matériau, à savoir une première face (22) et une seconde face (28), caractérisé en ce qu'il comporte :

- une première enceinte de rétention (17) d'une première solution (18) avec au moins une espèce ionique, comprenant une paroi ouverte (20), des moyens (23, 24) d'application de ladite paroi ouverte de façon sensiblement étanche sur ladite première face, et des moyens (25) d'alimentation en continu de la première solution,
- une seconde enceinte (26) de rétention d'une seconde solution (29) avec au moins une deuxième espèce ionique, comprenant une paroi ouverte (27), des moyens (23, 24) d'application de ladite paroi ouverte de ladite seconde enceinte de façon sensiblement étanche sur la dite seconde face, et un dispositif (31) de circulation de la seconde solution (29),
- des moyens (33) générateurs d'un champ électrique entre la première face et la seconde face, agencés pour permettre la migration électrophorétique desdites espèces ioniques dispersées dans la première solution au travers du matériau vers la seconde solution.

**29.** Dispositif selon la revendication 28, caractérisé en ce qu'il comporte de plus des moyens (31) de prélèvement et d'analyse du contenu de la seconde solution en espèces ioniques correspondant aux espèces introduites dans la première solution.

**30.** Dispositif selon l'une quelconque des revendications 28 et 29, caractérisé en ce qu'il comporte de plus des moyens (33, 34) permettant d'augmenter sensiblement l'intensité du champ électrique au-delà d'un seuil déterminé.

**31.** Dispositif selon l'une quelconque des revendications 28, 29 et 30, caractérisé en ce qu'il comporte de plus des moyens (35) de chauffage externe du matériau au-delà d'un seuil déterminé.

**32.** Dispositif selon l'une quelconque des revendications 28, 29 et 30, caractérisé en ce qu'il comporte de plus des moyens (36) de chauffage interne du matériau au-delà d'un seuil déterminé, par exemple par micro-ondes.

**33.** Application du dispositif selon l'une quelconque des revendications 28 à 30, à la consolidation d'un matériau lithique par -formation d'apatite dans la masse dudit matériau.

# EP 0 648 197 B1

**Patentansprüche**

1. Verfahren zur Einarbeitung von Stoffen in die Masse eines offenporigen Materials (1, 16, 36), dadurch gekennzeichnet,

   - daß eine elektrophoretische Migration in die Masse des Materials von einer Dispersion von Ionen in einer Lösung bewirkt wird, unter der Wirkung eines elektrischen Feldes (E), das zwischen einer ersten Zone und einer getrennten zweiten Zone dieses Materials aufgebracht wird,
   - daß die Dispersion zwei reaktive Ionen (4, 5) mit entgegengesetzten Vorzeichen enthält, wobei diese Ionen normalerweise zur Wechselwirkung miteinander fähig sind, um ein hartes oder hydrophobes Element (12), oder beides gleichzeitig, zu bilden, gegebenenfalls unter Vorbehalt einer vorherigen Anpassung ihrer relativen Anteile in der Dispersion, um die Wechselwirkung zur Produktion des harten oder hydrophoben Elementes auszurichten,
   - daß dasjenige der beiden Ionen, dessen Ladung ein dem Zeta-Potential des Materials entgegengesetztes Vorzeichen aufweist, mit einem Vektor (13) verbunden ist, der ein Zeta-Potential (14) mit demselben Vorzeichen wie das des Materials aufweist, so daß eine elektrisch isolierende Barriere ausgebildet wird zwischen der Ionenart mit entgegengesetztem Vorzeichen und gleichzeitig dem Material und der anderen reaktiven Ionenart, und deren Stabilität für eine ausreichende Zeit erhalten werden kann, um eine annähernd gleichmäßige Verteilung zwischen der ersten und der zweiten Zone in einem Teil mindestens der Masse des Materials unter der Wirkung des elektrischen Feldes sicherzustellen.

2. Verfahren nach Anspruch 1, dadurch gekennzeichnet, daß die Substanz, aus der der Vektor gebildet ist, so gewählt ist, daß eine Unterbrechung der Anwendung des elektrischen Feldes, nach einer Zeit oder im wesentlichen sofort, ein Verschwinden der Barriere zur Folge hat.

3. Verfahren nach Anspruch 1, dadurch gekennzeichnet, daß die Substanz des Vektors so gewählt ist, daß eine deutliche Erhöhung des elektrischen Feldes über einen ungefähr vorbestimmten Schwellenwert hinaus, ein Verschwinden der Barriere zur Folge hat.

4. Verfahren nach Anspruch 1, dadurch gekennzeichnet, daß die Substanz des Vektors so gewählt ist, daß eine Wärmezufuhr von außen ins Material über einen gewissen Schwellenwert der Temperatur hinaus, ein Verschwinden der Barriere zur Folge hat.

5. Verfahren zur Einarbeitung von Stoffen in die Masse eines offenporigen Materials (1, 16, 36), dadurch gekennzeichnet,

   - daß eine elektrophoretische Diffusion in die Masse des Materials von einer Dispersion von ionisierten Partikeln in einer Lösung bewirkt wird, unter der Wirkung eines elektrischen Feldes, das zwischen einer ersten Zone und einer getrennten zweiten Zone dieses Materials aufgebracht wird,
   - daß die Dispersion zwei reaktive Ionen (4, 5) mit entgegengesetzten Vorzeichen enthält, wobei diese Ionen normalerweise zur Wechselwirkung miteinander fähig sind, um ein hartes oder hydrophobes Element, oder beides gleichzeitig, zu bilden, gegebenenfalls unter Vorbehalt einer vorherigen Anpassung ihrer relativen Anteile in der Dispersion, um die Wechselwirkung zur Produktion des harten oder hydrophoben Elementes auszurichten,
   - daß die elektrische Aktivität dieser beiden reaktiven Ionen (4) maskiert wird, deren Ladung ein dem Zeta-Potential des Materials entgegengesetztes Vorzeichen aufweist, durch Verbinden mit einem Vektor (13), der ein Zeta-Potential (14) mit demselben Vorzeichen wie das des Materials aufweist, so daß eine im wesentlichen dichte elektrische Barriere zwischen Ionen und Material mit entgegengesetzten Vorzeichen ausgebildet wird, solange die Betriebsbedingungen der elektrophoretischen Diffusion aufrechterhalten werden, die aber instabil wird, wenn auf das Material andere bestimmte Betriebsbedingungen aufgebracht werden, und
   - daß diese anderen Betriebsbedingungen angewendet werden, wenn die Ionen ungefähr gleichmäßig zwischen der ersten und der zweiten Zone in einem Teil mindestens der Masse des Materials verteilt sind.

6. Verfahren nach Anspruch 5, dadurch gekennzeichnet, daß die bestimmten anderen Betriebsbedingungen die Unterbrechung der Anwendung des elektrischen Feldes umfassen.

7. Verfahren nach Anspruch 5, dadurch gekennzeichnet, daß die bestimmten anderen Betriebsbedingungen eine deutliche Erhöhung der Intensität des elektrischen Feldes über einen mit der Stabilität der im wesentlichen dichten Barriere verträglichen Schwellenwert hinaus umfaßt.

8. Verfahren nach einem der vorhergehenden Ansprüche 5 bis 7, dadurch gekennzeichnet, daß die bestimmten anderen Betriebsbedingungen eine Wärmezufuhr ins Material über einen mit der Stabilität der im wesentlichen dichten Barriere verträglichen Schwellenwert hinaus umfaßt.

9. Verfahren nach einem der vorhergehenden Ansprüche, dadurch gekennzeichnet, daß es zur Verfestigung des Materials angewendet wird.

10. Verfahren nach einem der vorhergehenden Ansprüche, dadurch gekennzeichnet, daß der Vektor aus Lipid-Vesikeln aus amphiphilen Molekülen gebildet ist, die geeignet sind zum Einkapseln der Ionenart, deren Zeta-Potential ein entgegengesetztes Vorzeichen zu dem des Materials aufweist.

11. Verfahren nach Anspruch 10, dadurch gekennzeichnet, daß die amphiphilen Moleküle des Einkapselungsvektors aus oberflächenaktiven Stoffen oder Phospholipiden ausgewählt werden.

12. Verfahren nach einem der Ansprüche 9 bis 11, dadurch gekennzeichnet,

- daß es zur Verfestigung eines lithischen Materials wie porösen Stein oder Beton angewendet wird,
- daß die Ionen mit entgegengesetzten Vorzeichen die Ionen $Ca^{2+}$ und die Ionen $PO_4^{3-}$ umfassen,
- daß die Ionen $Ca^{2+}$ in den Vektor eingekapselt werden, und
- daß die relativen Anteile dieser Ionen zuvor angepaßt werden, gegebenenfalls unter Berücksichtigung der Elemente der Zusammensetzung des lithischen Materials, um eine Bildung von Calciumphosphaten im Innern der behandelten Masse des Materials herbeizuführen, eventuell nach Anwendung bestimmter anderer Zustandsvariablen.

13. Verfahren nach Anspruch 12, dadurch gekennzeichnet, daß die gebildeten Calciumphosphate im wesentlichen Apatit umfassen.

14. Verfahren nach Anspruch 13, dadurch gekennzeichnet, daß der Apatit Hydroxyapatit ist.

15. Verfahren nach Anspruch 12, dadurch gekennzeichnet, daß die allgemeine Formel des untersuchten Calciumphosphats durch die folgende Gleichung dargestellt wird:

$$Ca_{10-x}(PO_4)_{6-x-y}(HPO_4)_y(OH)_{2-z}$$

wobei x, y und z durch die folgende Ladungsgleichgewichtsbeziehung verbunden sind:

$$2(10 - x) = 3(6 - x - y) + 2y + 2 - z$$

mit $x + y + z = 0$ bei $0 < x < 1$,
eine oder mehrere Komponenten dieser Formel werden substituiert durch Ersetzen eines oder mehrerer $Ca^{2+}$-Ionen durch eines oder mehrere Elemente ausgewählt aus $Sr^{2+}$, $Ba^{2+}$, $Pb^{2+}$, $Ln^{3+}$, $Na^+$, $Mg^{2+}$ und/oder eines oder mehrerer $PO_4^{3-}$-Ionen durch eines oder mehrere Elemente ausgewählt aus $VO_4^{3-}$, $AsO_4^{3-}$, $SiO_4^{4-}$, $CO_3^{2-}$, $HPO_4^{2-}$, $sO_4^{2-}$ und/oder eines oder mehrerer $OH^-$-Ionen durch eines oder mehrere Elemente ausgewählt aus $F^-$, $Cl^-$, $CO_3^{2-}$, $S^{2-}$.

16. Verfahren nach einem der Ansprüche 10 bis 15, dadurch gekennzeichnet, daß die Vesikel weich sind und eine Größe über der mittleren Porosität des Materials aufweisen.

17. Verfahren nach einem der Ansprüche 10 bis 16, dadurch gekennzeichnet, daß der mittlere Durchmesser der Vesikel in der Größe kleiner als 500 nm ist.

18. Verfahren nach einem der Ansprüche 1 bis 9, dadurch gekennzeichnet, daß es angewendet wird, um das Material dicht zu machen.

**19.** Verfahren nach Anspruch 18, dadurch gekennzeichnet, daß der Vektor aus Matrixstrukturen ausgehend von hydrophilen und unlöslichen Molekülen gebildet wird, die geeignet sind, die Ionenart, deren Zetapotential ein dem des Materials entgegengesetztes Vorzeichen aufweist, einzufangen.

**20.** Verfahren nach Anspruch 19, dadurch gekennzeichnet, daß die durch die Matrixstruktur eingefangene Ionenart ausgewählt ist aus nichtwasserlöslichen Molekülen wie natürlichen biologischen Polymeren oder synthetischen Polymeren.

**21.** Verfahren nach einem der vorhergehenden Ansprüche, dadurch gekennzeichnet, daß das Zetapotential des Vektors im Absolutwert in der Größe höher als 20 mVolt ist.

**22.** Verfestigtes lithisches Material gekennzeichnet durch Apatit enthaltende Poren verteilt über mindestens einen Teil der Dicke des lithischen Materials.

**23.** Verfestigtes lithisches Material nach Anspruch 22, gekennzeichnet durch Apatit enthaltende Poren im wesentlichen verteilt über die gesamte Dicke des Materials.

**24.** Verfestigtes lithisches Material nach Anspruch 22 oder 23, gekennzeichnet durch Hydroxyapatit enthaltende Poren.

**25.** Dichtes Material gekennzeichnet durch hydrophobe Substanz enthaltende Poren, die unter den natürlichen biologischen Polymeren oder synthetischen Polymeren ausgewählt ist, wobei die Substanz im wesentlichen über einen Teil mindestens der Dicke des Materials verteilt ist.

**26.** Dichtes Material gekennzeichnet durch hydrophobe Substanz enthaltende Poren, die unter den natürlichen biologischen Polymeren oder synthetischen Polymeren ausgewählt ist, wobei die Substanz im wesentlichen über die gesamte Dicke des Materials verteilt ist.

**27.** Dichtes lithisches Material nach Anspruch 25 oder Anspruch 26 wie Stein, Beton oder armierter Beton.

**28.** Vorrichtung (15) zum Einarbeiten von Stoffen in die Masse eines offenporigen Materials mit mindestens zwei äußeren Seiten, die sich auf jeder Seite des Materials gegenüberstehen, nämlich einer ersten Seite (22) und einer zweiten Seite (28), dadurch gekennzeichnet, daß sie umfaßt:

- eine erste Vorratszelle (17) einer ersten Lösung (18) mit mindestens einer Ionenart, die aufweist eine offene Wand (20), Mittel (23, 24) zum Aufbringen der offenen Wand in im wesentlichen dichter Weise auf die erste Seite und Mittel (25) zur kontinuierlichen Zuführung der ersten Lösung,
- eine zweite Vorratszelle (26) einer zweiten Lösung (29) mit mindestens einer zweiten Ionenart, die eine offene Wand (27), Mittel (23, 24) zum Aufbringen der offenen Wand der zweiten Zelle in im wesentlichen dichter Weise auf die zweite Seite und eine Vorrichtung (31) zur Zirkulation der zweiten Lösung (29) aufweist,
- Mittel (33) zur Erzeugung eines elektrischen Feldes zwischen der ersten Seite und der zweiten Seite, so angeordnet, daß sie die elektrophoretische Migration der in der ersten Lösung dispergierten Ionen durch das Material zur zweiten Lösung ermöglichen.

**29.** Vorrichtung nach Anspruch 28, dadurch gekennzeichnet, daß sie außerdem Mittel (31) zur Entnahme und Analyse des Inhaltes der zweiten Lösung auf Ionen, die den in die erste Lösung eingeführten Ionen entsprechen, aufweist.

**30.** Vorrichtung nach einem der Ansprüche 28 oder 29, dadurch gekennzeichnet, daß sie außerdem Mittel (33, 34) aufweist, die eine deutliche Erhöhung der Intensität des elektrischen Feldes über einen bestimmten Schwellenwert hinaus ermöglichen.

**31.** Vorrichtung nach einem der Ansprüche 28, 29 oder 30, dadurch gekennzeichnet, daß sie außerdem Mittel (35) zur äußeren Erwärmung des Materials über einen bestimmten Schwellenwert hinaus aufweist.

**32.** Vorrichtung nach einem der Ansprüche 28, 29 oder 30, dadurch gekennzeichnet, daß sie außerdem Mittel (36) zur inneren Erwärmung des Materials über einen bestimmten Schwellenwert hinaus, beispielsweise durch Mikrowellen, aufweist.

33. Verwendung der Vorrichtung nach einem der Ansprüche 28 bis 30 zum Verfestigen eines lithischen Materials durch Ausbildung von Apatit in der Masse des Materials.

**Claims**

1. Process for introducing a substance into the bulk of a material (1, 16, 36) with open porosity, characterized

   - in that an electrophoretic migration is produced in the bulk of this material of a dispersion of ionic species within a solution, under the effect of an electrical field (E) applied between a first region and a separate second region of this material,
   - in that the said dispersion contains two reactive ionic species (4, 5) of opposite signs, these ionic species being normally capable of interacting with each other to produce a hard or hydrophobic component (12), or both at the same time, if appropriate on condition of a previous adjustment of their relative proportions within the dispersion in order to direct the said interaction toward the production of this hard or hydrophobic component,
   - in that the one of the two ionic species whose charge is of opposite sign to the zeta potential of the material is associated with a vector (13) which has a zeta potential (14) of the same sign as that of the material, forming an electrically insulating barrier between the said species of opposite sign and at the same time the material and the other reactive ionic species, and whose stability can be preserved for a sufficient time to ensure an approximately uniform distribution under the effect of the electrical field between the first and second region in at least a part of the bulk of the material.

2. Process according to claim 1, characterized in that the substance of which the vector consists is such that an interruption in the application of the electrical field entails, ultimately or appreciably immediately, a disappearance of the barrier.

3. Process according to claim 1, characterized in that the substance of the vector is such that an appreciable increase in the electrical field beyond an approximately predetermined threshold entails a disappearance of the barrier.

4. Process according to claim 1, characterized in that the substance of the vector is such that a heat input external to the material beyond a certain temperature threshold entails a disappearance of the barrier.

5. Process for introducing a substance into the bulk of a material (1, 16, 36) with open porosity, characterized

   - in that an electrophoretic diffusion is produced in the bulk of this material of a dispersion of ionized particles within a solution, under the effect of an electrical field applied between a first region and a separate second region of this material,
   - in that the said dispersion contains two reactive ionic species (4, 5) of opposite signs, these ionic species being normally capable of interacting with each other to produce a hard or hydrophobic component, or both at the same time, if appropriate on condition of a previous adjustment of their relative proportions within the dispersion in order to direct the said interaction toward the production of this hard or hydrophobic component,
   - in that the electrical activity of the one of the two reactive ionic species (4) whose charge is of opposite sign to the zeta potential of the material is masked by associating it with a vector (13) which has a zeta potential (14) of the same sign as that of the material, forming an appreciably impervious electrical barrier between species and material of opposite signs as long as the operating conditions of electrophoretic diffusion are maintained, but unstable when other determined operating conditions are applied to the material,
   - and in that the said other determined operating conditions are applied when the species are distributed approximately uniformly between the first and the second region in at least a part of the bulk of the material.

6. Process according to claim 5, characterized in that the other determined operating conditions include the interruption of the application of the electrical field.

7. Process according to claim 5, characterized in that the other determined operating conditions include the appreciable increase in the intensity of the electrical field beyond a threshold compatible with the stability of the appreciably impervious barrier.

8. Process according to any one of the preceding claims 5 to 7, characterized in that the other determined operating conditions include a heat input to the material beyond a threshold compatible with the stability of the appreciably impervious barrier.

9. Process according to any one of the preceding claims, characterized in that it is applied to the consolidation of the material.

10. Process according to any one of the preceding claims, characterized in that the vector is formed by lipid vesicles based on amphiphilic molecules capable of encapsulating the ionic species whose zeta potential is of opposite sign to that of the material.

11. Process according to claim 10, characterized in that the amphiphilic molecules of the encapsulating vector are chosen from surface-active agents or phospholipids.

12. Process according to any one of claims 9 to 11, characterized

- in that it is applied to the consolidation of a lithic material such as stone or porous concrete,
- in that the ionic species of opposite signs comprise $Ca^{2+}$ ions and $PO_4^{3-}$ ions,
- in that it is the $Ca^{2+}$ ions that are encapsulated in the vector,
- and in that the relative proportions of these ionic species are previously adjusted, taking into account if applicable the constituent elements of the lithic material, so as to entail a formation of calcium phosphates actually within the treated bulk of the material, optionally after application of the other determined random conditions.

13. Process according to claim 12, characterized in that the calcium phosphates formed include essentially apatite.

14. Process according to claim 13, characterized in that the apatite is hydroxyapatite.

15. Process according to claim 12, characterized in that the general formula of the calcium phosphate sought after being given by the following expression:

$$Ca_{10-x}(PO_4)_{6-x-y}(HPO_4)_y(OH)_{2-z}$$

x, y and z being linked by the following charge equilibrium relationship:

$$2(10-x) = 3(6-x-y) + 2y + 2 - z$$

with $x + y + z = 0$ for $0 < x < 1$,
one or more components of this formula are substituted by replacing one or more $Ca^{2+}$ ions with one or more elements chosen from $Sr^{2+}$, $Ba^{2+}$, $Pb^{2+}$, $Ln^{3+}$, $Na^+$, $Mg^{2+}$, and/or one or more $PO_4^{3-}$ ions with one or more components chosen from $VO_4^{3-}$, $AsO_4^{3-}$, $SiO_4^{4-}$, $CO_3^{2-}$, $HPO_4^{2-}$, $SO_4^{2-}$, and/or one or more $OH^-$ ions with one or more components chosen from $F^-$, $Cl^-$, $CO_3^{2-}$, $S^{2-}$.

16. Process according to any one of claims 10 to 15, characterized in that the vesicles are supple and greater in size than the mean porosity of the material.

17. Process according to any one of claims 10 to 16, characterized in that the mean diameter of the vesicles is smaller than of the order of 500 nm.

18. Process according to any one of claims 1 to 9, characterized in that it is applied to making the material impervious.

19. Process according to claim 18, characterized in that the vector is formed by matrix structures based on hydrophilic and insoluble molecules capable of trapping the ionic species whose zeta potential is of opposite sign to that of the material.

20. Process according to claim 19, characterized in that the ionic species trapped by the matrix structure is chosen from water-insoluble molecules such as natural biological polymers or synthetic polymers.

**21.** Process according to according to [sic] any one of the preceding claims, characterized in that the zeta potential of the vector is higher than of the order of 20 mV in absolute value.

**22.** Consolidated lithic material characterized by pores filled with apatite distributed over at least a portion of the thickness of the said lithic material.

**23.** Consolidated lithic material according to claim 22, characterized by pores filled with apatite appreciably distributed over the whole of the thickness of the said material.

**24.** Consolidated lithic material according to claim 22 or 23, characterized by pores filled with hydroxyapatite.

**25.** Impervious material characterized by pores filled with hydrophobic substance taken from natural biological polymers or synthetic polymers, the said substance being appreciably distributed over at least a portion of the thickness of the said material.

**26.** Impervious material characterized by pores filled with hydrophobic substance taken from natural biological polymers or synthetic polymers, the said substance being appreciably distributed over the whole of the thickness of the said material.

**27.** Impervious lithic material according to claim 25 or claim 26, such as stone, concrete or reinforced concrete.

**28.** Device (15) for introducing a substance into the bulk of a material with open porosity exhibiting at least two separate outer faces, opposite one another on each side of the said material, namely a first face (22) and a second face (28), characterized in that it comprises:

- a first enclosure (17) for retaining a first solution (18) with at least one ionic species, including an open wall (20), means (23, 24) for application of the said open wall in an appreciably leakproof manner to the said first face, and means (25) for continuously feeding the first solution,
- a second enclosure (26) for retaining a second solution (29) with at least one second ionic species, including an open wall (27), means (23, 24) for application of the said open wall of the said second enclosure in an appreciably leakproof manner to the said second face, and a device (31) for circulating the second solution (29),
- means (33) for generating an electrical field between the first face and the second face, arranged to permit the electrophoretic migration of the said ionic species dispersed in the first solution through the material toward the second solution.

**29.** Device according to claim 28, characterized in that it additionally comprises means (31) for sampling and analysis of the second solution for the content of ionic species corresponding to the species introduced into the first solution.

**30.** Device according to either of claims 28 and 29, characterized in that it additionally comprises means (33, 34) allowing the intensity of the electrical field to be appreciably increased beyond a determined threshold.

**31.** Device according to any one of claims 28, 29 and 30, characterized in that it additionally comprises means (35) for external heating of the material beyond a determined threshold.

**32.** Device according to any one of claims 28, 29 and 30, characterized in that it additionally comprises means (36) for internal heating of the material beyond a determined threshold, for example by microwaves.

**33.** Application of the device according to any one of claims 28 to 30, to the consolidation of a lithic material by formation of apatite in the bulk of the said material.

FIG. 1

FIG. 2

FIG. 3

FIG. 4

EP 0 648 197 B1

**FIG. 5**

**FIG. 6**